# NEUE EUROPÄISCHE PATENTSCHRIFT

(11) **EP 2 279 803 B2**
(45) Veröffentlichungstag und Bekanntmachung des Hinweises auf die Entscheidung über den Einspruch: **02.03.2016**
(45) Hinweis auf die Patenterteilung: 19.09.2012
(21) Anmeldenummer: 10006871.7
(22) Anmeldetag: 02.07.2010
(51) Int. Cl.: B08B 9/08, B65G 21/18, B65G 11/06, B65B 55/24

(54) **Wendelförderer**
Helical conveyer
Transporteur hélicoïdal

(30) Priorität: 29.07.2009 DE 102009035273
(43) Veröffentlichungstag der Anmeldung: 02.02.2011
(73) Patentinhaber: Klotzki Maschinenbau GmbH, 93098 Mintraching (DE)
(72) Erfinder: Klotzki, Ulrich, 93073 Neutraubling (DE)
(74) Vertreter: Glück Kritzenberger Patentanwälte PartGmbB

(56) Entgegenhaltungen:
- EP-A1- 1 952 900
- GB-A- 1 024 113
- US-A- 3 032 798
- US-A- 4 577 651
- US-A- 5 291 987
- US-A1- 2008 184 552

## Beschreibung

Die Erfindung bezieht sich auf einen Wendelförderer gemäß Oberbegriff Patentanspruch 1. Wendelförderer dieser Art sind gekannt (DE 101 16 854 A1). Nachteilig bei diesen bekannten Wendelförderer ist, dass die Anordnung von mit dem wenigstens einem Mitnehmer nicht umlaufenden, insbesondere stationären Funktionselementen in dem von der wendelartigen Transportstrecke umschlossenen Raum sowie auch die Zuführung von eventuellen Versorgungsleitungen In diesen Raum nur mit relativ großen konstruktiven Aufwand möglich sind.

Bekannt sind weiterhin Wendelförderer (US 3 032 798 A2), und zwar in ihrer Ausbildung als Vorrichtung zum Reinigen von Behältern, Nachteilig bei diesen bekannten Wendelförderern ist, dass sich die wendelartige Transportstrecke um eine horizontale Maschinenachse erstreckt, so dass Jeder Behälter bei seinem Transport vom Behältereinlauf an den Behälterauslauf mehrfach aus einer unteren Position in eine in Transportrichtung anschließende oberen Position der wendelartige Transportstrecke angehoben werden muss und weitest gehend unkontrolliert aus der jeweiligen oberen Position in die anschließende untere Position gleitet.

Aufgabe der Erfindung ist es, einen Wendelförderer aufzuzeigen, der diesen Nachteil vermeidet. Zur Lösung dieser Aufgabe ist ein Wendelförderer entsprechend dem Patentanspruch 1 ausgebildet.

Bei einer bevorzugten Ausführungsform ist der Wendelförderer Bestandteil einer Vorrichtung zum Reinigen der Behälter. Durch die spezielle Ausbildung der Vorrichtung bzw. des Wendelförderer ist es u.a. möglich, Düsen zum Abspritzen der Behälter problemlos auch innerhalb des von der wendelartigen Transportstrecke umgebenden Raumes auch stationär anzuordnen und über einfache Verbindungsleitungen, insbesondere auch über Verbindungsleitungen ohne Drehverteiler oder Drehverbindungen mit derjenigen Quelle zu verbinden, die die Behandlungs- und/oder Reinigungsflüssigkeit zur Verfügung stellt.

"Behälter" im Sinne der Erfindung sind Behältnisse, insbesondere an ihrer Außenkontur kubische oder quaderförmige Behältnisse, die zur Lagerung und/oder zum Transport von Produkten verwendet werden, wie z.B. Transport- und/oder Lagerkästen, Getränke- bzw. Flaschenkästen usw.

Unter "Drehkranz" ist im Sinne der Erfindung ganz allgemein u.a. ein Maschinenelement zu verstehen, welches wenigstens zwei Elemente oder Lagerelemente aufweist, die an einander zugewandten Seiten jeweils wenigstens eine die Dreh- oder Maschinenachse konzentrisch umschließende und bezogen auf diese Achse axial versetzte Gleit- oder Lagerflächen bilden, zwischen denen dann bevorzugt Wälzköper, z.B. in Form von Kugeln vorgesehen sind.

Der Ausdruck "im Wesentlichen" bedeutet im Sinne der Erfindung Abweichungen von jeweils exakten Wert um +/- 10%, bevorzugt um +/- 5% und/oder Abweichungen in Form von für die Funktion unbedeutenden Änderungen.

Die Erfindung wird im Folgenden anhand der Figuren an einem Ausführungsbeispiel näher erläutert. Es zeigen:

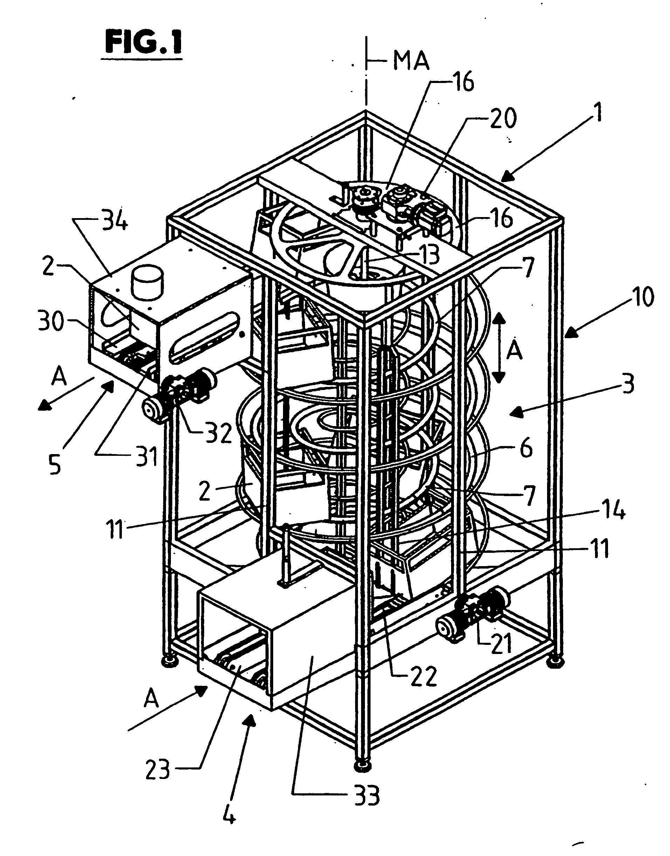

- Fig. 1: in vereinfachter perspektivischer Darstellung einen Spiral- oder Wendelförderer gemäß der Erfindung;

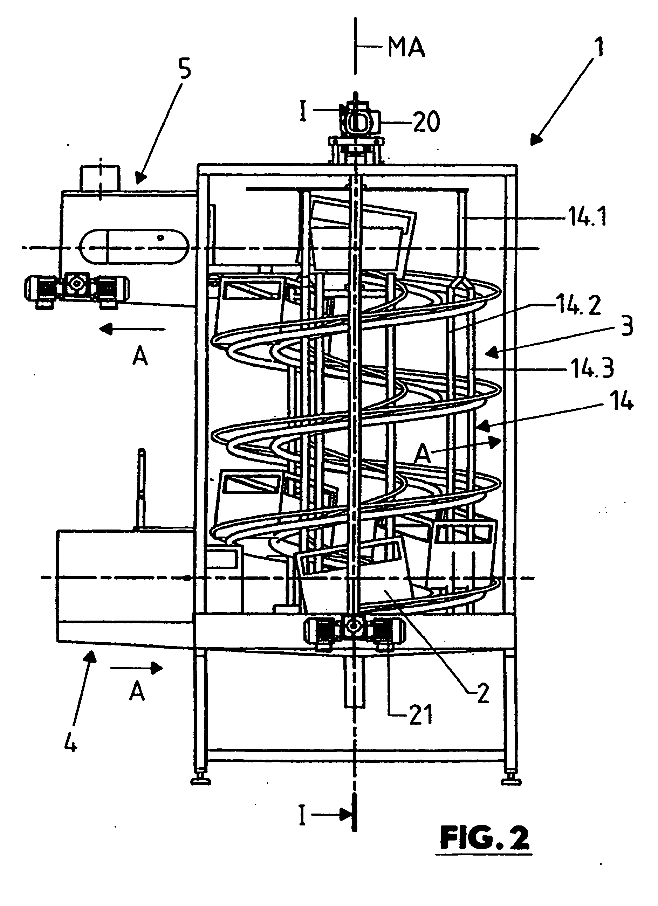

- Fig. 2: den Wendelförderer in Seitenansicht;
- Fig. 3: einen Schnitt entsprechend der Linie I - I der Figur 2;
- Fig. 4: in vergrößerter Teildarstellung eines der Lager eines unteren Tragringes des Förderers der Figuren 1 - 3;

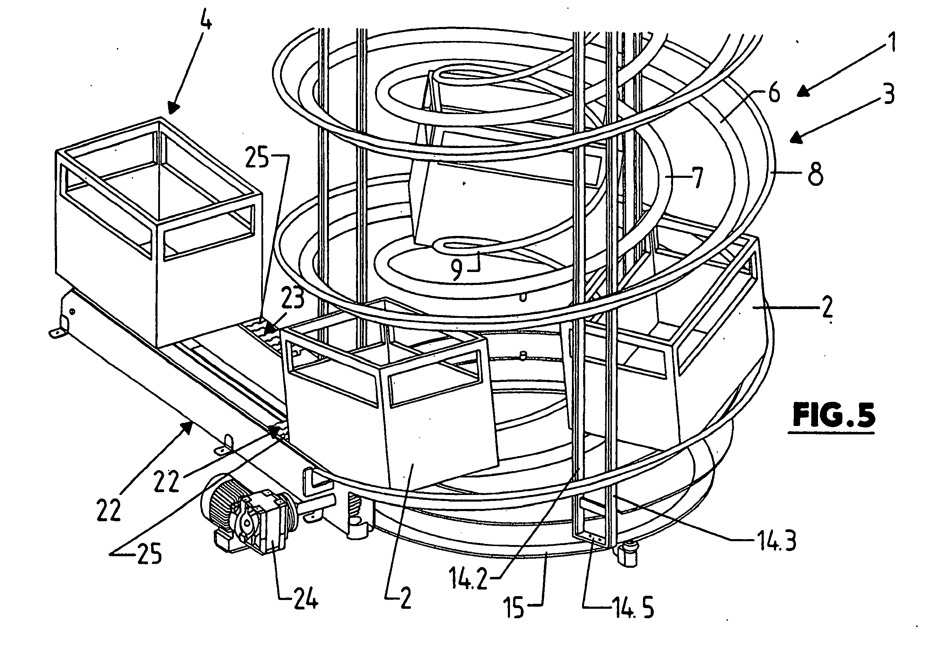

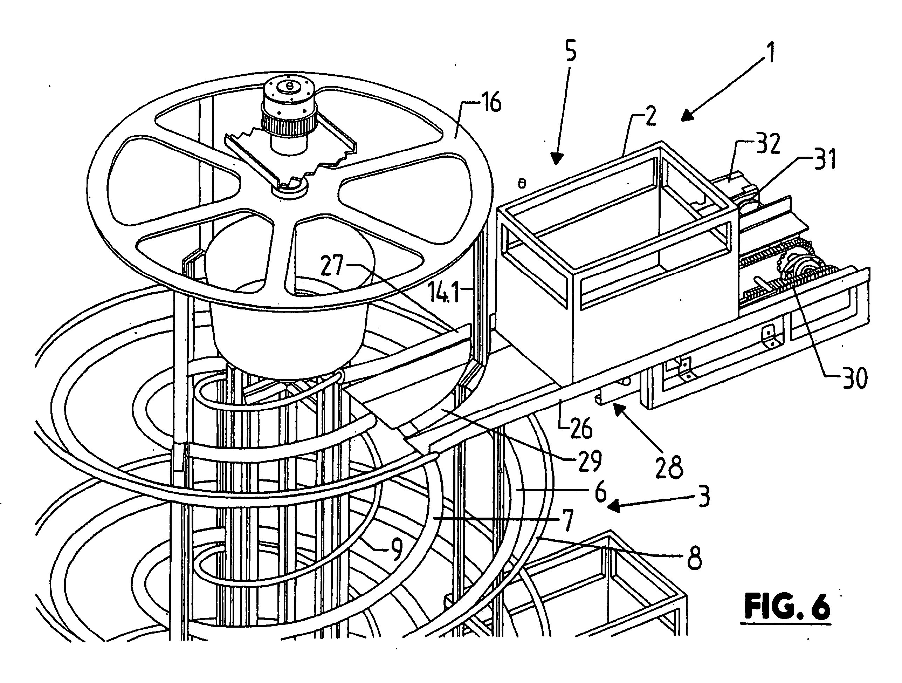

- Fig. 5 und 6: jeweils in einer schematischen Teildarstellung den Spiralförderer im Bereich eines Behältereinlaufs (Figur 5) oder eines Behälterauslaufs (Figur 6),
- Fig. 7: in Einzeldarstellung einen Mitnehmer des Wendel-Förderers der Figuren 1 - 6.

Der in den Figuren allgemein mit 1 bezeichnete Wendelförderer dient zum Fördern von Behältnissen oder Behältern 2 in Form von Kästen, beispielsweise in Form von Transportkästen, auch Flaschenkästen auf einer eine vertikale Maschinenachse MA umschließenden wendelförmigen und in den Figuren allgemein mit 3 bezeichneter Transportstrecke. Die Behälter 2, die die bei Transportkästen oder Flaschenkästen übliche Formgebung aufweisen, werden dem Wendelförderer 1 bzw. dessen Transportstrecke von einem nicht dargestellten äußeren Transporteur in einer Transportrichtung A über einen unteren Behältereinlauf 4 zugeführt. Die Behälter 2 werden, nachdem sie die Transportstrecke 3 in der Transportrichtung A passiert haben, von der Transportstrecke 3 über einen oberen Behälterauslauf 5 in Transportrichtung A an einem nicht dargestellten äußeren Transporteur zur weiteren Verwendung und/oder Behandlung weitergeleitet. Bei der dargestellten Ausführungsform sind die Behälter 2 in Draufsicht rechteckförmig ausgebildet und werden auf der Transportstrecke 3 in Normallage, d.h. mit der Behälteröffnung oben liegend derart bewegt, dass die schmäleren Umfangsseiten der Behälter 2 senkrecht zur Transportrichtung A orientiert sind.

Im Detail besteht die Transportstrecke 3 u.a. aus zwei sich jeweils wendelförmig um die Maschinenachse MA vom Behältereinlauf 4 bis an den Behälterlauf 5 erstreckenden Gleitführungen 6 und 7, die zwischen dem Behältereinlauf 4 und dem Behälterauslauf 5 jeweils niveaugleich verlaufen und einen Abstand voneinander aufweisen, der etwas kleiner ist als die Breite, die die Behälter 2 in Transportrichtung A besitzen, sodass die Behälter 2 während der Bewegung auf der Transportstrecke 3 mit ihrem unten liegenden Behälterboden in der Nähe ihrer längeren Umfangsseiten auf den beiden Gleitführungen 6 und 7 aufstehen.

Die Transportstrecke 3 besteht weiterhin aus zwei die Maschinenachse MA ebenfalls wendelartig umschließenden und im Wesentlichen vom Behältereinlauf 4 bis an den Behälterauslauf 5 reichenden Führungsgeländern 8 und 9, die jeweils oberhalb der von den Gleitführungen 6 und 7 gebildeten wendelartigen Transport- oder Gleitebene verlaufen und Anlagen für die längeren Umfangsseiten der Behälter 2 bilden. Die Elemente der Transportstrecke 3 und dabei insbesondere die beiden Gleitführungen 6 und 7 sowie die zugehörigen Führungsgeländer 8 und 9 sind an einem Vorrichtungsrahmen 10 des Wendelförderers 1 gehalten, und zwar die bezogen auf die Maschinenachse MA äußere Gleitführung 6 und das dieser Gleitführung benachbarte Führungsgeländer 8 an äußeren, sich parallel zur Maschinenachse MA erstreckenden Streben 11 und die innenliegende Gleitführung 7 und das zugehörige Führungsgeländer 9 an einer innenliegenden Tragkonstruktion 12, die unten unmittelbar und oben über eine feststehende Welle 13 mit dem Vorrichtungsrahmens 10 verbunden ist. Die Gleitführungen 6 und 7 sowie die Führungsgeländer 8 und 9 sind bei der dargestellten Ausführungsform jeweils von einem Rohrprofil hergestellt.

Die Transportstrecke 3 umfasst weiterhin mehrere Mitnehmer 14, beispielsweise drei Mitnehmer 14, die um die Maschinenachse MA in gleichmäßigen Winkelabständen verteilt vorgesehen sind und sich jeweils parallel zur Maschinenachse MA orientiert durch den Freiraum zwischen den Gleitführungen 6 und 7 und den Führungsgeländern 8 und 9 von der Oberseite des Wendelförderers 1 bzw. der Transportstrecke 3 bis an die Unterseite des Wendelförderers 1 bzw. der Transportstrecke 3 erstrecken.

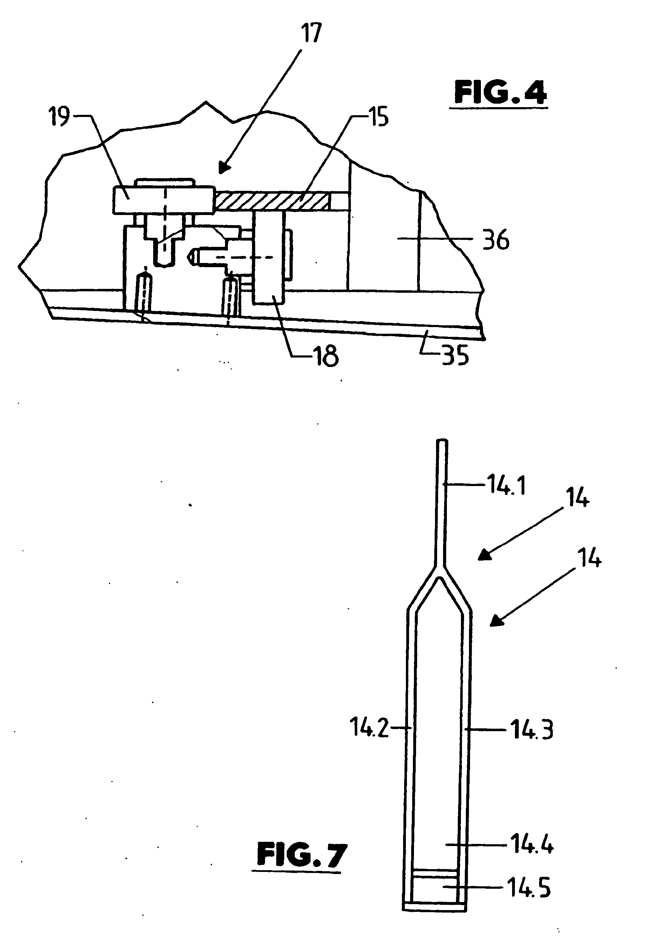

Wie insbesondere in der Figur 7 im Detail dargestellt, ist jeder Mitnehmer 14 stimmgabelartig ausgeführt, und zwar bestehend mit einem oberen, bezogen auf die Gesamtlänge des Mitnehmers 14 kurzen Mitnehmerabschnitt 14.1, der sich an seinem unteren Ende in zwei parallele und voneinander beabstandete Mitnehmerabschnitte 14.2 und 14.3 gabelt, die an dem dem Mitnehmerabschnitt 14.1 abgewandten unteren Ende über zwei Querstege 14.4 und 14.5 miteinander verbunden sind.

Mit dem unteren Ende, d.h. mit dem dortigen Steg 14.5 sind die Mitnehmer 14 jeweils an einem die Maschinenachse MA konzentrisch und mit radialem Abstand umschließenden und unterhalb des Behältereinlaufs 4 bzw. unterhalb der dortigen Bewegungsbahn der Behälter 2 angeordneten Tragring 15 befestigt, der auch die mittlere Tragkonstruktion 12 ebenfalls mit radialem Abstand umschließt. An dem den Stegen 14.4 und 14.5 abgewandten oberen Ende des Mitnehmerabschnittes 14.1 sind die Mitnehmer 14 jeweils an einem Rad 16 befestigt, welches auf der Welle 13 um die Maschinenachse MA drehbar gelagert ist. Die beiden Mitnehmerabschnitte 14.1 und 14.3 bilden Anlageflächen für die auf der Transportstrecke 3 durch Schieben mit den Mitnehmern 14 weiter bewegten Behälter 2. Lediglich unmittelbar vor Erreichen des Behälterauslaufs 5 liegt nur noch der Mitnehmerabschnitt 14.1 gegen den jeweiligen Behälter an.

Die Mitnehmer 14 sind am Tragring 15 sowie am Rad 16 derart befestigt, dass die von den Mitnehmerabschnitten 14.2 und 14.3 definierte Ebene parallel zu demjenigen Randbereich liegt, gegen den der jeweilige Mitnehmer 14 an der in Transportrichtung A nacheilenden Schmalseite eines Behälters 2 anliegt.

Zur Lagerung des unteren, auf einem Niveau unterhalb des Behältereinlaufs 4 angeordneten Tragrings dienen wenigstens drei am Maschinengestell vorgesehene und um die Maschinenachse MA vorzugsweise in gleichmäßigen Winkelabständen versetzte Lagerelemente 17, die bei der dargestellten Ausführungsform jeweils eine um eine horizontale oder im Wesentlichen horizontale, radial zur Maschinenachse MA frei drehbare Rolle 18 zur axialen Abstützung des Tragringes 15 sowie eine um eine Achse parallel zur Maschinenachse MA frei drehbare Rolle 19 zur radialen Abstützung des Tragringes 15 an der Ringinnenseite oder Außenseite aufweisen.

Durch einen Maschinenantrieb sind der untere Tragring 15 und das obere Rad 16 um die Maschinenachse MA in Transportrichtung A synchron angetrieben, sodass sich mit dem Tragring 15 und dem Rad 16 auch die Mitnehmer 14 in dem zwischen den Gleitführungen 6 und 7 und den Führungsgeländern 8 und 9 gebildeten freien Raum für das Mitführen der Behälter 2 auf der Transportstrecke 3 bewegen. Dieser Maschinenantrieb kann auf unterschiedlichste Weise realisiert sein, beispielsweise durch eigenständige, aber synchronisierte elektromotorische Antriebe für das Rad 16 und den Tragring 15, wie dies in den Figuren mit den beiden Antrieben 20 und 21 angedeutet ist, oder aber durch einen einzigen Antrieb, beispielsweise elektromotorischen Antrieb, mit dem sowohl der Tragring 15 als auch das Rad 16 antriebsmäßig verbunden sind. In jedem Fall erfolgt der unmittelbare Antrieb des Tragringes 15 dadurch, dass dieser mit einer Verzahnung versehen ist, in die ein Ritzel des Antriebs oder Antriebsstrangs eingreift. Ist die Verzahnung an derjenigen Ringfläche des Tragringes 15 vorgesehen, an der auch die radiale Führung erfolgt, so sind die Rollen 19 als Zahnrad ausgeführt, wobei dann wenigstens eines dieser Zahnräder das den Tragring 15 antreibende Ritzel ist.

Der Behältereinlauf 4, über den die Behälter 2 ebenfalls mit ihren schmäleren Umfangsseiten senkrecht oder quer zur Transportrichtung A orientiert der Transportstrecke 3 etwa tangential zur Umlaufsbahn der Mitnehmer 14 zugeführt werden, besteht im Wesentlichen aus zwei senkrecht zur Transportrichtung A voneinander beabstandeten und synchron angetriebenen Transportbändern 22 und 23, die jeweils ein eine geschlossene Schlaufe bildendes und durch einen elektromotorischen Antrieb 24 endlos umlaufend angetriebenes Transportelement beispielsweise in Form einer Scharnierbandkette aufweisen. Beide Transportbändern 22 und 23 reichen nur bis unmittelbar an die äußere Gleitführung 6. Durch die tangentiale Anordnung oder Ausrichtung des Behältereinlaufs 4 und der Transportbänder 22 und 23in Bezug auf Umlaufbahn der Mitnehmer 14 weist das eine Transportband 22 eine größere Länge als das andere Transportband 23 auf. Das Einschieben der Behälter 2 vom Behältereinlauf 4 in die Transportstrecke 3 erfolgt durch die Transportbänder 22 und 23. Durch die Ausbildung und Anordnung der Transportbänder 22 und 23 ist gewährleistet, dass jeder Behälter 2 bei der Übergabe vom Behältereinlauf 4 an die Transportstrecke 3 zu jedem Zeitpunkt an seinem Behälterboden ausreichend auf den Transportbändern 22 und 23 bzw. auf den Gleitführungen 6 und 7 abgestützt ist, und zwar zunächst am Behälterboden auf den beiden Transportbändern 22 und 23, dann beim ersten Einführen in die Transportstrecke 3 mit dem Behälterboden zumindest im Bereich der in Transportrichtung A nacheilenden Seite noch auf den beiden Transportbändern 22 und 23 und an der in Transportrichtung A vorauseilenden Seite mit dem Behälterboden bereits auf der äußeren Gleitführung 6 und dann anschließend mit dem Behälterboden auf beiden Gleitführungen 6 und 7.

Weiterhin sind der Behältereinlauf 4 bzw. die dortigen Transportbänder 22 und 23 und/oder nicht dargestellte, am Behältereinlauf 4 vorgesehene Rückhalteelemente für die Behälter 2 derart gesteuert, dass das Einbringen jedes Behälters 2 in die Transportstrecke 3 abgeschlossen ist, bevor ein Mitnehmer 14 den Übergang zwischen dem Behältereinlauf und der Transportstrecke 3 erreicht, sodass die in die Transportstrecke 3 hineinbewegten Behälter 2 jeweils zuverlässig von den Mitnehmern 14 mitgeführt und entlang der Transportstrecke 3 bewegt werden.

Am Behälterauslauf 5 enden die beiden Gleitführungen 6 und 7 jeweils in einer bei der dargestellten Ausführungsform von Führungsblechen 26 und 27 gebildeten Gleitführung 28 für die Behälterböden. Die beiden Führungsbleche 26 und 27, von denen das Führungsblech 26 an den äußeren Streben 11 und das Führungsblech 27 an der inneren Tragkonstruktion 12 des Maschinenrahmens 10 befestigt sind, bilden zwischen sich einen Spalt 29 für den Durchtritt des jeweils oberen Mitnehmerabschnitts 14.1 der Mitnehmer 14. An der Gleitführung 28 sind weiterhin zwei Transportbänder 30 und 31 mit Antrieb 32 vorgesehen, über die die Behälter 2 aus dem Behälterauslauf 5 an den nicht dargestellten äußeren Transporteur weitergefördert werden.

Im einfachsten Fall dient der Wendelförderer 1 als Förder- oder Transporteinrichtung, die es bei geringer Baugröße und damit insbesondere bei beengtem räumlichen Verhältnissen ermöglichen, Behälter 2 von einem unteren Niveau auf ein höheres Niveau zu fördern.

Bevorzugt ist der Wendelförderer 1 aber Bestandteil einer Vorrichtung zum Behandeln der Behälter 2, beispielsweise Bestandteil einer Behälterreinigungsanlage und/oder Behälterwaschanlage, bei der die Behälter 2 zumindest auf der Transportstrecke 3 durch verschiedene Behandlungszonen bewegt werden, die z.B. von Spritzdüsen für eine Behälterinnen- und Außenabspritzung gebildet sind. Hierbei besteht dann insbesondere auch die Möglichkeit, an den Mitnehmern 14 oder aber an mit diesen umlaufenden Elementen weitere Düsen vorzusehen, die eine zusätzliche Behandlung bzw. Abspritzung der quer zur Transportrichtung A orientierten Umfangsseiten der Behälter 2 und/oder der Behälterunterseiten usw. bewirken.

Insbesondere bei Ausbildung als Behälterreinigungs- oder Waschvorrichtung ist der Maschinenrahmen als nach außen hin geschlossenes Gehäuse ausgeführt. Ebenso sind der Behältereinlauf und der Behälterauslauf bevorzugt mit einem tunnelartigen Gehäuseelement ausgebildet, wie dies in den Figuren mit 33 und 34 angedeutet ist. Weiterhin ist der die Transportstrecke 3 aufweisende Innenraum der Vorrichtung dann unterhalb der Transportstrecke mit einem als Auffangwanne ausgebildeten Boden 35 versehen.

Unterhalb der Wand 35 sind dann im Maschinenrahmen 10 verschiedene Funktionselemente vorgesehen, beispielsweise wenigstens ein Behälter für die Reinigungs- und Waschflüssigkeit, insbesondere auch wenigstens ein Behälter für die in der Sammelwanne (Boden 35) aufgefangene und rückgeführte Reinigungs- und Waschflüssigkeit, zumindest eine Pumpe usw. untergebracht.

Durch die beschriebene Ausbildung, insbesondere durch die Verwendung des Tragringes 15 ist es möglich, für das Reinigen der Behälter 2 verwendete Funktionselemente, insbesondere Spritzdüsen und deren Versorgungsleitungen ohne konstruktiven Aufwand innerhalb des von der Transportstrecke 3 umschlossenen

Raumes anzuordnen um so insbesondere auch eine Abspritzung der Behälter 2 in einer Achsrichtung radial nach außen (bezogen auf die Maschinenachse MA) zu ermöglichen.

Der Wendelförderer 1 ist beispielsweise Bestandteil eines Trockners, d.h. der Vorrichtung zum Trockenen der zuvor in einer weiteren Vorrichtung gereinigten bzw. gewaschenen Behälter 2. In diesem Fall sind innerhalb des ebenfalls geschlossenen Gehäuses entlang der Transportstrecke 3 Auslässe oder Düsen zum Abblasen der Behälter 2 mit einem Luftstrom vorgesehen. Unterhalb der Wandung 35 befinden sich dann beispielsweise Aggregate zum Erzeugen der Blasluft.

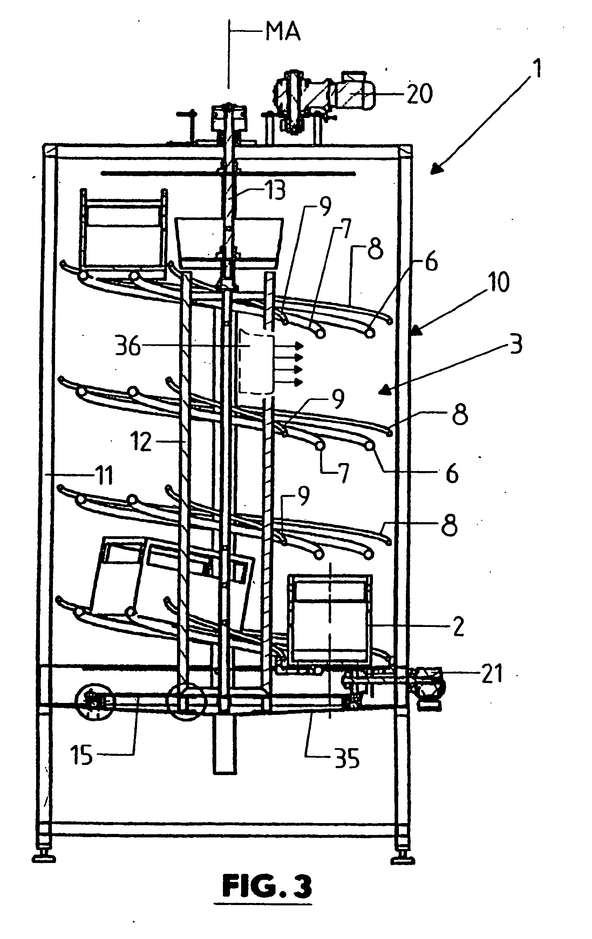

Die beschriebene Ausbildung des Wendelförderers 1 und dabei insbesondere die Verwendung des Tragringes 15 hat vor allem auch bei Ausbildung dieses Förderers als Trockner zum Trocknen der Behälter 2 durch Abblasen ganz erhebliche Vorteile. Durch die beschriebene Ausbildung ist eine problemlose Anordnung der einen relativ großen Querschnitt und z.B. schlitzförmige Düsenöffnungen aufweisenden Zuführungen für die Blasluft innerhalb des von der wendelartigen Transportstrecke 3 umschlossenen Raumes möglich, wie dies in der Figur 3 mit unterbrochenen Linien bei 36 angedeutet ist. Die Zuführungen sind dann durch den Tragring 15 mit einer nicht dargestellten und unterhalb des Bodens 35 angeordneten Einrichtung zur Erzeugung der Blasluft verbunden. Die schlitzförmigen Düsen erzeugen einen in Bezug auf die Maschinenachse MA radial nach außen gerichteten Blasluftstrom, der auch unterstützt durch die auf Flüssigkeitsreste an den Behältern 2 einwirkenden Zentrifugalkräfte ein wirksames Trocknen der Behälter 2 bewirkt.

Die Erfindung wurde voranstehend an einem Ausführungsbeispiel beschrieben. Es versteht sich, dass zahlreiche weitere Änderungen und Abwandlungen möglich sind. So ist es beispielsweise auch möglich, bei entsprechender Ausbildung des Behältereinlaufs 4 und/oder des Behälterauslaufs 5 auch dort eine Behandlung der Behälter 2 vorzunehmen, beispielsweise im Bereich des Behältereinlaufs eine Vorbehandlung der Behälter durch Vorabsprühen und/oder am Behälterauslauf 5 ein Abblasen der Behälter zum zumindest groben Entfernen von Reinigungs- und Waschflüssigkeit.

Bei der beschriebenen Ausführungsform erfolgt die Lagerung unteren von dem Tragring 15 gebildeten Mitnehmertragelementes mit radialem Abstand von der Maschinenachse MA, der (Abstand) gleich oder im Wesentlichen gleich dem halben Durchmesser des Tragringes 15 ist. Auch andere Ausführungen sind möglich, wobei der radiale Abstand aber bevorzugt mindestens 50% des halben Durchmessers des Tragringes 15 beträgt.

Wie die Figuren zeigen, sind bei der dargestellten Ausführungsform der Behältereinlauf 4 und der Behälterauslauf 5 an einer gemeinsamen Seite des Maschinengestells 10 vorgesehen, und zwar entsprechend dem tangentialen Verlauf der Förderrichtung A am Behältereinlauf und am Behälterauslauf 5 in Bezug auf den Verlauf der Förderrichtung innerhalb der Transportstrecke 3 an unterschiedlichen vertikalen Seiten des Maschinengestells 10. Selbstverständlich sind auch andere Ausführungen denkbar. Weiterhin wurde vorstehend davon ausgegangen, dass die Behälter 2 entlang der Transportstrecke 3 von unten nach oben bewegt werden. Grundsätzlich besteht auch die Möglichkeit, insbesondere bei entsprechend geringer Steigung der gewendelten Transportstrecke 3 die Behälter 2 in umgekehrter Richtung von dem oberen Ende an das untere Ende der Transportstrecke zu bewegen.

### Bezugszeichenliste

- 1: Wendelförderer
- 2: Behälter
- 3: Transportstrecke
- 4: Behältereinlauf
- 5: Behälterauslauf
- 6, 7: Gleitführung
- 8, 9: Führungsgeländer
- 10: Maschinengestell
- 11: Strebe
- 12: innere Tragkonstruktion
- 13: Welle
- 14: Mitnehmer
- 14.1 -14.3: Mitnehmerabschnitt
- 14.4, 14.5: Steg
- 15: Tragring
- 16: Rad
- 17: Lagereinrichtung
- 18, 19: Rolle
- 20, 21: Antrieb
- 22, 23: Transportband
- 24: Antrieb
- 25: Transportelement
- 26, 27: Führungsblech
- 28: Gleitführung
- 29: Schlitz
- 30, 31: Transportband
- 32: Antrieb
- 33, 34: Abdeckung oder Zusatzgehäuse
- 35: Boden
- 36: Zuführung für Blasluf

- A: Transportrichtung

## Patentansprüche

1. Wendelförderer für Behälter (2) in Form von Transportkästen mit wenigstens einer eine vertikale Maschinenachse (MA) wendelartig umschließenden und sich zwischen einem Behältereinlauf (4) und einem Behälterauslauf (5) erstreckenden Transportstrecke (3), die von bezogen auf die Maschinenachse (MA) außen liegenden sowie von bezogen auf die Maschinenachse (MA) innen liegenden Behälterführungs- und/oder Gleitelementen (6, 7, 8, 9) definiert ist, welche eine Transport- oder Gleitebene, auf der die Behälter (2) aufstehen, sowie seitliche Führungsgeländer für die Behälter (2) bilden, sowie mit wenigstens einem Mitnehmer (14), der sich über die gesamte Länge der von der Transportstrecke (3) gebildeten Wendel erstreckt und die Transportstrecke (3 zwischen den außen liegenden und den innen liegenden Behälterführungs- und/oder Gleitelementen (6, 7, 8, 9) durchgreift, wobei der wenigstens eine Mitnehmer (14) an wenigstens zwei um die Maschinenachse (MA) umlaufend antreibbaren Mitnehmertragelementen (15, 16) für eine Bewegung auf einer die Maschinenachse (MA) umschließenden Umlaufbahn gehalten ist, wobei die Führungsgeländer (8, 9) oberhalb der Transport- oder Gleitebene verlaufen und bezogen auf die Maschinenachse (MA) und bezogen auf den wenigstens einen Mitnehmer (14) ein radial außenliegendes seitliches Führungsgeländer (8) und ein radial innenliegendes seitliches Führungsgeländer (9) bilden,
**dadurch gekennzeichnet,**
**dass** eines der Mitnehmertragelemente ein drehbarer Tragring (15) mit einer Lagerung mit radialem Abstand von der Maschinenachse (MA) ist, und
**dass** der wenigstens eine Mitnehmer (14) mit einem Ende an dem unteren Tragring (15) und mit einem Ende an einem oberen, von einem Antrieb (20) um die Maschinenachse (MA) umlaufend angetriebenen und das zweite Mitnehmertragelement bildenden Rad (16) befestigt ist.

2. Wendelförderer nach Anspruch 1, **dadurch gekennzeichnet,**
**dass** der radiale Abstand der Lagerung gleich oder im Wesentlichen gleich dem halben Durchmesser des Tragringes ist, zumindest aber größer ist als 50% des halben Durchmesser des Tragringes (15),
und/oder
**dass** der Tragring (15) Teil eines Drehkranzes ist oder mit einem solchen verbunden ist,
und/oder
**dass** der Tragring (15) an mehreren um die Maschinenachse (MA) versetzten und von dieser radial beabstandeten Lagereinrichtungen (17) gelagert ist, die eine axiale und radiale Abstützung des Tragringes (15) bewirken.

3. Wendelförderer nach Anspruch 1 oder 2, **dadurch gekennzeichnet, dass** der Behältereinlauf (4) und/oder der Behälterauslauf (5) für eine Förderrichtung (A) der Behälter (2) tangential oder im Wesentlichen tangential zu der Transportrichtung (A) der Transportstrecke (3) ausgebildet sind.

4. Wendelförderer nach einem der vorhergehenden Ansprüche, **dadurch gekennzeichnet, dass** der Behältereinlauf (4) wenigstens ein Transportelement (22) vorzugsweise in Form eines Transportbandes (22) aufweist, welches tangential oder im Wesentlichen tangential in Bezug auf die außen liegenden Behälterführungs- und/oder Gleitelementen (6, 8) orientiert ist.

5. Wendelförderer nach einem der vorhergehenden Ansprüche, **dadurch gekennzeichnet, dass** der Behältereinlauf (4) wenigstens ein Transportelement, vorzugsweise ein Transportband (23) aufweist, welches tangential oder im Wesentlichen tangential in Bezug auf die innen liegenden Behälterführungs- und/oder Gleitelementen (7, 9) orientiert ist.

6. Wendelförderer nach Anspruch 4 oder 5, **dadurch gekennzeichnet, dass** die Transportelemente (22, 23) jeweils an den außenliegenden Behältergleit- und Führungselementen (6, 8) enden.

7. Wendelförderer nach einem der vorhergehenden Ansprüche, **dadurch gekennzeichnet, dass** der Behälterauslauf (5) wenigstens eine Gleit- oder Transportebene (28, 30, 31) für die Behälter (2) bildet, wobei in der Transport-oder Gleitebene (28) beispielsweise wenigstens ein Schlitz (29) für den diese Transportebene schneidenden wenigstens einen Mitnehmer (14) vorgesehen ist.

8. Wendelförderer nach einem der vorhergehenden Ansprüche, **dadurch gekennzeichnet, dass** der Behältereinlauf (4) und der Behälterauslauf (5) an einer gemeinsamen Seite eines Maschinengestells (10) des Wendelförderers (1) und/oder auf unterschiedlichem Höhenniveau vorgesehen sind, und zwar vorzugsweise der Behälterauslauf (5) oberhalb des Behältereinlaufs (4).

9. Wendelförderer nach einem der vorhergehenden Ansprüche, **gekennzeichnet durch** einen gemeinsamen oder aber **durch** getrennte, synchronisierte Antriebe für die Mitnehmertragelemente (15, 16).

10. Wendelförderer nach einem der vorhergehenden Ansprüche, **gekennzeichnet durch** seine Ausbildung als Vorrichtung zum Behandeln, insbesondere zum Reinigen und/oder Trocknen der Behälter (2).

11. Wendelförderer nach Anspruch 10, **dadurch gekennzeichnet, dass** innerhalb eines von der Transportstrecke (3) umgebenen Raumes Funktionselemente (36) zum Behandeln, insbesondere zum Reinigen und/oder Trocknen der Behälter (2) sowie Versorgungsleitungen oder -kanäle insbesondere für diese Funktionselemente (36) vorgesehen sind.

12. Wendelförderer nach einem der vorhergehenden Ansprüche, **dadurch gekennzeichnet, dass** unterhalb des unteren Mitnehmertragelementes, vorzugsweise unterhalb des Tragringes (15) eine vorzugsweise als Wanne ausgebildete Wand (35) vorgesehen ist.

13. Wendelförderer nach einem der vorhergehenden Ansprüche, **dadurch gekennzeichnet, dass** zumindest ein unteres Mitnehmertragelement als Tragring (15) ausgebildet ist.

## Claims

1. A spiral conveyor for containers (2) in the form of transport boxes having at least one transport path (3) enclosing a vertical machine axis (MA) in a spiral manner and extending between a container inlet (4) and a container outlet (5), which transport path is defined by, with reference to the machine axis (MA), external and also, with reference to the machine axis (MA), internal container-guide and/or sliding elements (6, 7, 8, 9), which form a transport or sliding plane, on which the containers (2) stand, and also lateral guide rails for the containers (2), and also having at least one entrainment member (14), which extends over the entire length of the spiral formed by the transport path (3) and which reaches through the transport path (3) between the external and the internal container-guide and/or sliding elements (6, 7, 8, 9), wherein the at least one entrainment member (14) is held on at least two entrainment member support elements (15, 16), which can be driven rotationally about the machine axis (MA), for a movement on an orbit surrounding the machine axis (MA), wherein the guide rails (8, 9) run above the transport or sliding plane and, with reference to the machine axis (MA) and with reference to the at least one entrainment member (14), form a radial external lateral guide rail (8) and a radial internal lateral guide rail (9),
**characterised in that**
one of the entrainment member support elements is a rotatable support ring (15) having a bearing with radial distance from the machine axis (MA), and
**in that** the at least one entrainment member (14) is fastened via one end on the lower support ring (15) and via one end on an upper wheel (16), which is driven rotationally about the machine axis (MA) by a drive (20) and forms the second entrainment member support element.

2. The spiral conveyor according to claim 1, **characterised**
**in that** the radial distance of the bearing is equal to or essentially equal to half of the diameter of the support ring, but at least is larger than 50% of half of the diameter of the support ring (15),
and/or
**in that** the support ring (15) is part of a ring mount or is connected to such,
and/or
**in that** the support ring (15) is mounted on a plurality of bearing devices (17) displaced around the machine axis (MA) and radially spaced from the same, which bearing devices effect an axial and radial support of the support ring (15).

3. The spiral conveyor according to claim 1 or 2, **characterised in that** the container inlet (4) and/or the container outlet (5) for a conveying direction (A) of the containers (2) are constructed tangentially or essentially tangentially to the transport direction (A) of the transport path (3).

4. The spiral conveyor according to one of the preceding claims, **characterised in that** the container inlet (4) has at least one transport element (22), preferably in the form of a transport belt (22), which is orientated tangentially or essentially tangentially with reference to the external container-guide and/or sliding elements (6, 8).

5. The spiral conveyor according to one of the preceding claims, **characterised in that** the container inlet (4) has at least one transport element, preferably a conveyor belt (23), which is orientated tangentially or essentially tangentially with reference to the internal container-guide and/or sliding elements (7, 9).

6. The spiral conveyor according to claim 4 or 5, **characterised in that** the transport elements (22, 23) end at the external container sliding and guide elements (6, 8) in each case.

7. The spiral conveyor according to one of the preceding claims, **characterised in that** the container outlet (5) forms at least one sliding or transport plane (28, 30, 31) for the containers (2), wherein for example at least one slot (29) is provided in the transport or sliding plane (28) for the at least one entrainment member (14) intersecting this transport plane.

8. The spiral conveyor according to one of the preceding claims, **characterised in that** the container inlet (4) and the container outlet (5) are provided on a common side of a machine frame (10) of the spiral conveyor (1) and/or at different height levels, specifically preferably the container outlet (5) above the container inlet (4).

9. The spiral conveyor according to one of the preceding claims, **characterised by** one common or else by separate, synchronised drives for the entrainment member support elements (15, 16).

10. The spiral conveyor according to one of the preceding claims, **characterised by** its design as a device for treating, particularly for cleaning and/or drying the containers (2).

11. The spiral conveyor according to claim 10, **characterised in that**, inside a space surrounded by the transport path (3), functional elements (36) for treating, particularly for cleaning and/or drying the containers (2), and also supply lines or channels, particularly for these functional elements (36), are provided.

12. The spiral conveyor according to one of the preceding claims, **characterised in that** a wall (35), preferably constructed as a trough, is provided underneath the lower entrainment member support element, preferably underneath the support ring (15).

13. The spiral conveyor according to one of the preceding claims, **characterised in that** at least one lower entrainment member support element is constructed as a support ring (15).

## Revendications

1. Transporteur hélicoïdal pour des conteneurs (2) sous la forme de caissons de transport avec au moins un trajet de transport (3) entourant à la manière d'une hélice un axe vertical de machine (MA) et s'étendant entre une entrée (4) de conteneurs et une sortie (5) de conteneurs, qui est défini par des éléments de guidage et/ou de glissement des conteneurs (6, 7, 8, 9) externes en rapport à l'axe de la machine (MA), ainsi qu'internes en rapport à l'axe de la machine (MA), lesquels forment un plan de transport ou de glissement sur lequel sont posés les conteneurs (2), ainsi que des balustrades de guidage pour les conteneurs (2), ainsi qu'avec au moins un élément d'entraînement (14) qui s'étend sur toute la longueur de l'hélice formée par le trajet de transport (3) et qui traverse le trajet de transport (3) entre les éléments de guidage et/ou de glissement des conteneurs (6, 7, 8, 9) internes et externes, l'au moins un élément d'entraînement (14) étant maintenu sur au moins deux éléments porteurs (15, 16) d'élément d'entraînement susceptibles d'être entraînés en périphérie autour de l'axe de la machine (MA) pour un déplacement sur une orbite entourant l'axe de la machine (MA), les balustrades de guidage (8, 9) s'étendant au-dessus du plan de transport ou plan de coulissement et en rapport à l'axe de la machine (MA) et en rapport à l'au moins un élément d'entraînement (14) formant une balustrade de guidage (8) latérale externe en direction radiale et une balustrade de guidage (9) latérale interne en direction radiale,
**caractérisé en ce qu'**un des éléments porteurs d'élément d'entraînement est un anneau porteur (15) rotatif, avec un palier à distance radial de l'axe de la machine (MA) et **en ce que** l'au moins un élément d'entraînement (14) est fixé par une extrémité sur l'anneau porteur (15) inférieure et par une extrémité sur une roue supérieure, (16) entraînée en périphérie par un entraînement (20) autour de l'axe de la machine (MA) et formant le deuxième élément porteur d'élément d'entraînement.

2. Transporteur hélicoïdal selon la revendication 1, **caractérisé en ce que** La distance radiale du logement est égale ou sensiblement égale au demi-diamètre de l'anneau porteur, mais au moins supérieur à 50 % du demi-diamètre d'anneau porteur (15),
et/ou
**en ce que** l'anneau porteur (15) est une partie d'une couronne de pivotement ou est raccordé à celle-ci,
et/ou
**en ce que** l'anneau porteur (15) est logé sur plusieurs dispositifs de palier (17) déportés autour de l'axe de la machine (MA) et espacés de celui-ci en direction radiale, qui assurent un appui axial et radial d'anneau porteur (15).

3. Transporteur hélicoïdal selon la revendication 1 ou la revendication 2, **caractérisé en ce que** l'entrée (4) de conteneurs et/ou la sortie (5) de conteneurs sont formées pour une direction de transport (A) des conteneurs (2), de manière tangentielle ou sensiblement tangentielle à la direction de transport (A) du trajet de transport (3).

4. Transporteur hélicoïdal selon l'une quelconque des revendications précédentes, **caractérisé en ce que** l'entrée (4) de conteneurs comporte au moins un élément de transport (22), de préférence sous la forme d'une bande transporteuse (22), lequel est orienté de manière tangentielle ou sensiblement tangentielle en rapport aux éléments de guidage et/ou de glissement des conteneurs (6, 8) externes.

5. Transporteur hélicoïdal selon l'une quelconque des revendications précédentes, **caractérisé en ce que** l'entrée (4) de conteneurs comporte au moins un élément de transport, de préférence une bande transporteuse (23), lequel est orienté de manière tangentielle ou sensiblement tangentielle en rapport aux éléments de guidage et/ou de glissement des conteneurs (7, 9) internes.

6. Transporteur hélicoïdal selon la revendication 4 ou la revendication 5, **caractérisé en ce que** les éléments de transport (22, 23) se terminent chacun sur les éléments de guidage et de glissement des conteneurs (6, 8) externes.

7. Transporteur hélicoïdal selon l'une quelconque des revendications précédentes, **caractérisé en ce que** la sortie (5) de conteneurs forme au moins un plan de glissement ou de transport (28, 30, 31) pour les conteneurs (2), dans le plan de transport ou de glissement (28) étant prévue par exemple au moins une échancrure (29) pour l'au moins un élément d'entraînement (14) recoupant ledit plan de transport.

8. Transporteur hélicoïdal selon l'une quelconque des revendications précédentes, **caractérisé en ce que** l'entrée (4) de conteneurs et la sortie (5) de conteneurs sont prévus sur un côté commun d'un bâti de machine (10) du transporteur hélicoïdal et/ou sur différents niveaux de hauteur, à savoir de préférence la sortie (5) de conteneurs au-dessus de l'entrée (4) de conteneurs.

9. Transporteur hélicoïdal selon l'une quelconque des revendications précédentes, **caractérisé par** une commande commune ou encore par des commandes séparées synchronisées pour les éléments porteurs (15, 16) d'élément d'entraînement.

10. Transporteur hélicoïdal selon l'une quelconque des revendications précédentes, **caractérisé par** sa configuration comme dispositif destiné à traiter, notamment à nettoyer et/ou à sécher les conteneurs (2).

11. Transporteur hélicoïdal selon la revendication 10, **caractérisé en ce qu'**à l'intérieur d'un espace entourant le trajet de transport (3) sont prévus des éléments fonctionnels (36) destinés à traiter, notamment à nettoyer et/ou à sécher les conteneurs (2), ainsi que des conduits ou canaux d'alimentation, notamment pour lesdits éléments fonctionnels (36).

12. Transporteur hélicoïdal selon l'une quelconque des revendications précédentes, **caractérisé en ce qu'**en-dessous de l'élément porteur d'élément d'entraînement inférieur, de préférence en-dessous d'anneau porteur (15) est prévue une paroi (35) conçue de préférence en tant que cuve.

13. Transporteur hélicoïdal selon l'une quelconque des revendications précédentes, **caractérisé en ce qu'**au moins un élément porteur inférieur d'élément d'entraînement est conçu en tant qu'anneau porteur (15).
